Europäisches Patentamt

European Patent Office

Office européen des brevets

(19)

(11) Numéro de publication : **0 009 084**
**B1**

(12) **FASCICULE DE BREVET EUROPÉEN**

(45) Date de publication du fascicule du brevet :
07.04.82

(51) Int. Cl.³ : **G 06 F   7/68**, B 41 B 25/10,
**G 06 K  15/10**

(21) Numéro de dépôt : 79102452.4

(22) Date de dépôt : 16.07.79

(54) **Dispositif pour accroître la cadence d'un train d'impulsions et application aux imprimantes.**

(30) Priorité : 26.09.78 FR 7828295

(43) Date de publication de la demande :
02.04.80 (Bulletin 80/07)

(45) Mention de la délivrance du brevet :
07.04.82 Bulletin 82/14

(84) Etats contractants désignés :
DE FR GB

(56) Documents cités :
DE - B - 1 524 219
FR - A - 1 039 058
FR - A - 2 331 204

(73) Titulaire : **International Business Machines Corporation**

**Armonk, N.Y. 10504 (US)**

(72) Inventeur : **Vautier, Rémi**
**139 avenue de la Lanterne Entrée Thera**
**F-06200 Nice (FR)**

(74) Mandataire : **Bonneau, Gérard**
**COMPAGNIE IBM FRANCE Département de Propriété Industrielle**
**F-06610 La Gaude (FR)**

Imprimerie Jouve, 18, rue St-Denis, 75001 Paris, France

Dispositif pour accroître la cadence d'un train d'impulsions et application aux imprimantes

## Description

### Domaine technique

La présente invention se rapporte aux générateurs d'impulsions et plus particulièrement à un dispositif pour accroître la cadence d'un train d'impulsions de N à N + n, et tel que chacune des impulsions du train de sortie de N + n impulsions est synchronisée sur l'impulsion du train d'origine de N impulsions qui la précède immédiatement.

### Technique antérieure

Il est souvent utile, dans les dispositifs qui mettent en œuvre une action à intervalles réguliers, de pouvoir accroître la cadence ou fréquence de répétition de cette action. Ceci est le cas par exemple d'un moteur de commande pas à pas, d'une imprimante, et de façon générale des dispositifs de commande de mouvements intermittents selon une fréquence donnée.

Par exemple, dans les imprimantes à aiguilles, la tête d'impression se présente sous forme d'une colonne d'aiguilles, les caractères étant imprimés par l'impact d'une partie des aiguilles activées à chaque déplacement relatif du papier. Ainsi la tête d'impression peut venir en position d'impression à chaque déplacement relatif du papier, sur lequel sont imprimés les caractères, égal à 0,254 mm (1/100 de pouce). Comme l'impression d'un caractère, en tenant compte de l'espacement, nécessite 10 impacts de la tête d'impression, une telle imprimante permet donc d'obtenir une densité d'impression de 10 caractères par 25,4 mm (par pouce). La commande de la tête d'impression se fait en activant les aiguilles adéquates à chaque déplacement relatif de la feuille d'impression égal à 0,254 mm, par des impulsions de commande survenant selon une cadence prédéterminée fonction de la vitesse dudit déplacement.

Si l'on veut maintenant obtenir une densité d'impression de 12 caractères par 25,4 mm, on peut alors modifier le dispositif de commande de l'imprimante, en utilisant par exemple le système décrit dans le brevet français 1 039 058 dans lequel un organe multiplicateur multiplie le nombre d'unités de largeur attribué à chaque caractère par un coefficient adéquat pour obtenir des caractères de largeur différente. On peut aussi générer un train d'impulsions à une cadence égale à 12/10 de la cadence des impulsions fournies par le dispositif de commande non modifié. Comme dans certaines imprimantes le dispositif de commande des impulsions d'impact de la tête d'impression est une carte de circuit imprimé, il est préférable de pouvoir recourir à la deuxième solution consistant à générer un nouveau train d'impulsions à partir du premier. Mais là se pose également un problème de synchronisation des impulsions générées sur les impulsions d'origine. En effet les impulsions d'origine sont normalement régulièrement espacées dans le temps, c'est-à-dire que l'intervalle de temps séparant deux impulsions d'origine est théoriquement égal à une valeur T bien définie. En réalité, il n'en est pas toujours ainsi et l'intervalle de temps séparant deux impulsions d'origine consécutives peut varier au cours du temps. C'est pourquoi la synchronisation des impulsions de sortie par rapport aux impulsions d'origine doit être constamment maintenu dans le temps.

L'art antérieur décrit des systèmes dans lesquels on obtient des trains d'impulsions de sortie dont la cadence est augmentée par rapport aux trains d'impulsions d'entrée. Ainsi le document FR-A-2 331 204 décrit un système de multiplication de fréquence appliqué à l'allumage d'un moteur à combustion interne. Ce document présente tous les éléments du préambule de la revendication 1. Mais dans ce document la fréquence du signal de sortie est un multiple de la fréquence du signal d'entrée. Ce système est donc inapplicable dans le cas où on désire simplement augmenter la densité d'impression selon un pré-réglage variable. Un autre système décrit dans le document DE-B 1 524 219 utilisé pour des méthodes de calibrage numérique, permet de multiplier la cadence d'un train d'impulsions d'entrée par un facteur compris entre 0 et 2. Mais en réalité le train d'impulsions de sortie est simplement obtenu par addition d'impulsions au train d'impulsions d'entrée, ce qui fait que les impulsions du train de sortie ne sont pas également réparties dans le temps.

### Exposé de l'invention

L'invention telle qu'elle est caractérisée dans les revendications résout le problème consistant à réaliser un dispositif pour obtenir, à partir de trains de N impulsions d'origine, des trains de N + n impulsions de sortie, chacune des impulsions de sortie étant synchronisée sur l'impulsion d'origine qui la précède immédiatement, la première impulsion de chacun des trains de N + n impulsions de sortie coïncidant avec la première impulsion du train de N impulsions d'origine, les impulsions de sortie pouvant être facilement réglées au cours du temps sans que la fréquence de ces dernières soit nécessairement un multiple de la fréquence du signal d'entrée.

Le dispositif de l'invention consiste en un compteur à incrémentation restauré par chaque impulsion

2

d'origine qui incrémente à une première fréquence prédéterminée jusqu'à l'impulsion d'origine suivante ; un compteur à décrémentation chargé par le contenu dudit compteur à incrémentation à l'apparition de ladite impulsion d'origine suivante qui décrémente à une seconde fréquence prédéterminée jusqu'à ce qu'il atteigne 0 ; un compteur à pré-réglage variable à chaque impulsion d'origine fournissant la seconde fréquence prédéterminée audit compteur à décrémentation à l'apparition de chaque impulsion d'origine ou à l'apparition des impulsions de sortie sauf la dernière de l'intervalle lorsque l'intervalle entre lesdites impulsions d'origine doit comporter plusieurs impulsions de sortie ; et une unité de contrôle pour pré-régler le compteur variable à un nombre différent à chaque impulsion d'origine ; et les impulsions de sortie étant produites chaque fois que ledit compteur à décrémentation atteint la valeur 0.

Une application du dispositif de l'invention est donnée dans la revendication 6.

Les avantages de l'invention ressortiront mieux de l'exposé qui suit fait en référence aux dessins annexés à ce texte qui représentent un mode de réalisation préféré de celle-ci.

### Brève description des figures

La figure 1 représente un exemple de réalisation du dispositif de l'invention.

La figure 2 représente un diagramme des temps pour aider à la compréhension du dispositif tel que représenté à la figure 1.

### Mode de réalisation

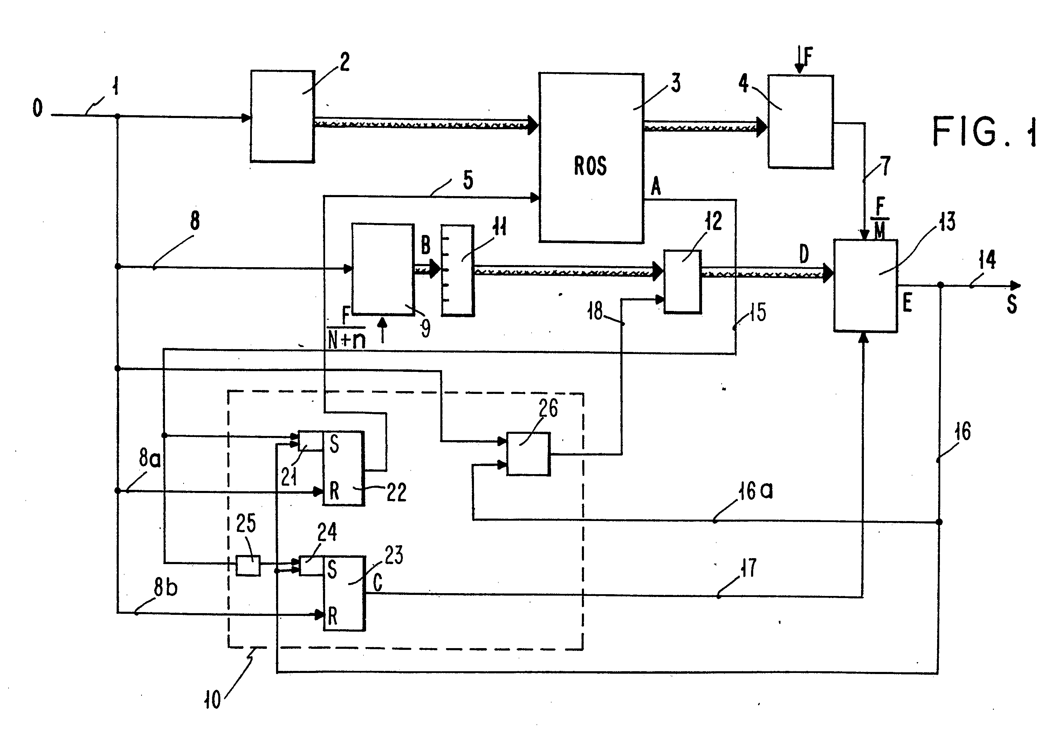

Le dispositif de l'invention va maintenant être décrit en se reportant à la figure 1.

Le train d'impulsions d'origine qui seront désignées O par la suite est reçu sur la ligne 1. Les impulsions O incrémentent le compteur d'impulsions d'origine 2. Le compteur 2 sert de registre d'adresse pour une mémoire permanente ROS 3 qui fournit, à chacune des incrémentations du compteur 2, un nombre M au compteur variable pré-réglé 4. En fait, l'adresse fournie à la mémoire 3 est constituée par le contenu du compteur 2 et du bit fourni sur la ligne 5 en provenance de l'unité logique 10. Mais la plupart du temps ce bit est égal à 0 et ne prend la valeur 1 que dans certains cas comme on le verra par la suite. A chaque adressage de la mémoire ROS 3 par le compteur 2, un nombre M que l'on va définir par la suite est fourni au compteur variable 4 qui s'incrémente à chaque impulsion d'une horloge de base de fréquence F, et fournit des impulsions de sortie à une fréquence F/M sur la ligne 7. A ce sujet le compteur 4 est du type compteur variable à pré-réglage décrit sous la référence TEXAS SN 74163, dans le manuel publié en 1976 par Texas Instrument sous le titre « The Integrated Circuit Catalog for Design Engineers ».

Le but de l'invention est d'obtenir des impulsions de sortie S régulièrement espacées dans le temps à partir d'impulsions d'entrée ou d'origine O régulièrement espacées dans le temps, et telles que pour un train de N impulsions d'entrée, on obtienne N + n (N et n étant des entiers) impulsions de sortie, la première des impulsions de sortie coïncidant avec la première impulsion d'entrée et l'impulsion de sortie, qui suit immédiatement le train de N + n impulsions de sortie coïncidant avec la première impulsion d'entrée du train suivant de N impulsions. Pour ce faire, les impulsions d'entrée O sont fournies par la ligne 8 à un compteur 9 qui s'incrémente constamment sous la commande d'une horloge fournissant des impulsions à la fréquence F/N + n. De la même façon que précédemment, la fréquence F/N + n peut être obtenue par un compteur du type décrit sous la référence TEXAS SN 74163 dans le manuel publié en 1976 par Texas Instrument sous le titre : « The Integrated Circuit Catalog for Design Engineers », pré-réglé constamment à la valeur N + n. A chaque impulsion 0 fournie à son entrée sur la ligne 8, le compteur 9 est remis à zéro, ce qui fait qu'entre deux impulsions d'origine, qu'on admettra séparées par un temps T, le compteur 9 s'incrémente de 0 à FT/N + n.

Le contenu du compteur 9 est chargé dans le registre 11 dont le contenu est fourni, par l'intermédiaire de la porte ET 12 au compteur 13 qui décrémente à la fréquence F/M des impulsions reçues sur la ligne 7. Ce dernier compteur est un compteur à décrémentation du type à retenue décrit sous la référence Texas SN 74191, dans le manuel publié en 1976 par Texas Instrument sous le titre : « The Integrated Circuit Catalog for Design Engineers ». La porte ET 12 qui permet de charger le compteur 13 avec le contenu du registre 11, est passante à chaque impulsion d'origine. Ainsi, à chaque impulsion d'origine $O_i$, le compteur 13 a été chargé par le contenu du compteur 9 obtenu entre les impulsions $O_{i-1}$ et $O_i$. Soit FT/N + n. A partir de là, le compteur 13 décrémente à la fréquence F/M, de la valeur FT/N + n jusqu'à 0. Lorsqu'il atteint la valeur 0, soit au bout d'un temps égal à M/N + n T, le compteur 13 émet une impulsion sur la sortie 14 (retenue).

Comme on va le voir les impulsions émises sur la ligne 14 sont les impulsions de sortie S. Supposons qu'il n'y a qu'une impulsion de sortie dans l'intervalle entre deux impulsions d'origine et que l'impulsion $O_0$ est la première du train d'impulsions d'origine coïncidant avec l'impulsion $S_0$ de sortie. T étant le temps séparant deux impulsions d'origine, la première impulsion de sortie $S_1$ se produit un temps t après la première impulsion d'entrée telle que (N + n) t = NT, soit à un temps t = NT/N + n après l'impulsion $O_0$. $S_2$ se produit ainsi un temps 2t après la première impulsion d'entrée soit :

$$2NT/N + n - T = (N - n)T/N + n$$

3

après l'impulsion $O_1$, l'impulsion $S_3$ se produit à un temps $N - 2n/N + n$ T après l'impulsion $O_2$ et ainsi de suite. On programme alors la mémoire ROS 3 de façon que, l'impulsion $O_i$ incrémentant le compteur 2 à la valeur i, l'adresse i corresponde à une valeur M égale à N-in. Par conséquent, à la première impulsion d'origine $O_o$ (i = 0), la fréquence fournie sur la ligne 7 par le compteur variable 4 au compteur 13 est F/N, ce qui fait que le compteur 13 atteint 0 et émet une impulsion au bout du temps $N/N + n$ T après l'impulsion $O_o$. De même, le compteur 13 fournit l'impulsion suivante (i = 1) au bout du temps $N - n/N + n$ T après l'impulsion $O_1$, l'impulsion correspondant à i = 2 au bout du temps $N - 2n/N + n$ T après l'impulsion $O_2$, etc. On voit donc que dans ces conditions, les impulsions (de retenue) émises par le compteur 13 sont bien les impulsions S recherchées.

Si n = 1, à un train de N impulsions d'entrée, correspond un train de N + 1 impulsions de sortie. Dans ce cas l'impulsion de sortie $S_0$ coïncide avec l'impulsion $O_O$, l'impulsion de sortie $S_1$ se produit au temps $N/N + 1$ T après l'impulsion $O_O$, l'impulsion $S_2$ se produit au temps $N - 1/N + 1$ T après l'impulsion $O_1$, ... l'impulsion de sortie $S_{i+1}$ se produit au temps $N - i/N + 1$ T après l'impulsion $O_i$, ... l'impulsion $S_N$ se produit au temps $N-(N-1)/N + 1$ T = $T/N + 1$ après l'impulsion $O_{N-1}$ et l'impulsion de sortie $S_{N+1}$ coïncide avec l'impulsion $O_N$.

Par contre lorsque 1 < n < N, il existe au moins un intervalle entre deux impulsions d'origine pendant lequel se produisent deux impulsions de sortie. En se reportant à la figure 1, on voit que la mémoire 3 comporte une ligne de sortie 15 qui fait partie des lignes de bits de sortie de la mémoire ROS à chaque adressage. Normalement, le bit sur la ligne 15 est 0 lorsqu'il n'y a qu'une impulsion de sortie se produisant dans l'intervalle de temps qui suit une impulsion d'origine $O_i$. Mais lorsque cet intervalle doit comporter deux impulsions de sortie à la suite de l'impulsion d'origine $O_i$, l'adressage de la mémoire 3 par le compteur 2 provoque la sortie d'un bit 1 sur la ligne 15. La ligne 15 est une des entrées du circuit ET 21 qui sert d'entrée d'enclenchement de la bascule 22 de l'unité logique 10. Lorsque la première impulsion de sortie qui suit l'impulsion d'origine $O_i$ se produit à la sortie du compteur 13, elle est transmise par la ligne 16 à la deuxième entrée du circuit ET 21, permettant ainsi l'enclenchement de la bascule FF 22. La sortie d'enclenchement 5 de la bascule 22 est donc à 1 et l'adressage modifié de la ROS permet d'accéder à la valeur M qui doit être utilisée pour l'intervalle séparant les deux impulsions de sortie se trouvant entre les impulsions d'origine $O_i$ et $O_{i+1}$. Cette valeur est d'ailleurs la valeur de M utilisée pour obtenir la première impulsion de sortie qui suit la première impulsion d'origine $O_o$.

Une autre bascule FF 23 de l'unité logique 1 est également utilisée de la façon suivante. Les deux bascules 22 et 23 sont restaurées à chaque impulsion d'origine par leur entrée de restauration respective 8a ou 8b. La bascule 23 étant restaurée, sa ligne de sortie de restauration 17 est portée à un niveau haut à l'impulsion d'origine $O_i$. La ligne 17 servant d'entrée d'« autorisation » au compteur 13, ce dernier commence donc à décrémenter à l'apparition de toute impulsion d'origine $O_i$. Si une seule impulsion de sortie doit être produite dans l'intervalle qui suit $O_i$, la ligne 15 fournit un bit 0, comme il a été dit précédemment et un 1 est fourni à une entrée du circuit ET 24 par l'intermédiaire de l'inverseur 25. De ce fait, lorsque l'impulsion de sortie apparaît sur la ligne 16, la deuxième entrée du circuit ET 24 est portée à un niveau haut et la bascule 23 est enclenchée. La ligne de sortie de restauration 17 retombe alors à un niveau bas et le compteur 13 est bloqué jusqu'à la prochaine impulsion d'origine.

Par contre, si deux impulsions de sortie doivent être produites dans l'intervalle qui suit l'impulsion d'origine $O_i$, la ligne 15 fournit un 1. Par conséquent, un bit 0 se trouve à l'entrée du circuit ET 24, et la bascule 23 ne sera pas enclenchée par la première impulsion de sortie sur la ligne 16, le circuit ET 24 étant fermé. La ligne 17 reste donc à son niveau haut à l'apparition de la première impulsion de sortie, et le compteur 13 est donc toujours « autorisé » à décrémenter. Sa valeur de départ est celle qui a été accumulée par le compteur 9 entre les deux impulsions d'origine précédentes. Cette valeur qui se trouve dans le registre 11 est transmise au compteur 13 par l'intermédiaire de la porte ET 12 rendu passante par la ligne d'entrée 18 de la façon suivante. La ligne d'entrée 18 est la sortie du circuit OU 26 qui a comme entrées la ligne 8c qui transmet l'impulsion d'origine, et la ligne 16a qui transmet l'impulsion de sortie. Par conséquent, la porte ET 12 est passante et le contenu du registre 11 est chargé dans le compteur 13 à l'apparition des impulsions d'origine et à l'apparition des impulsions de sortie.

Jusqu'à maintenant on a envisagé le cas où 1 < n < N. Lorsque n ≥ N, ce qui se produira rarement dans les cas d'application de l'invention, il suffit de programmer la mémoire ROS 3 de façon adéquate. Dès qu'un intervalle de temps entre deux impulsions d'origine comporte plusieurs impulsions de sortie, la mémoire ROS doit être programmée pour que l'apparition de l'impulsion d'origine provoque la sortie d'un 1 sur la ligne 15 qui doit subsister jusqu'à l'avant-dernière impulsion de sortie de l'intervalle, de façon à fournir la même valeur M pour chaque impulsion de sortie de l'intervalle. Pour ce faire on doit adjoindre à la mémoire ROS un compteur qui s'incrémente à chaque impulsion de sortie et est restauré à chaque impulsion d'origine, de façon que la valeur dudit compteur en adressant la mémoire ROS, puisse déterminer la sortie du 1 sur la ligne 15 jusqu'à l'avant-dernière impulsion de sortie.

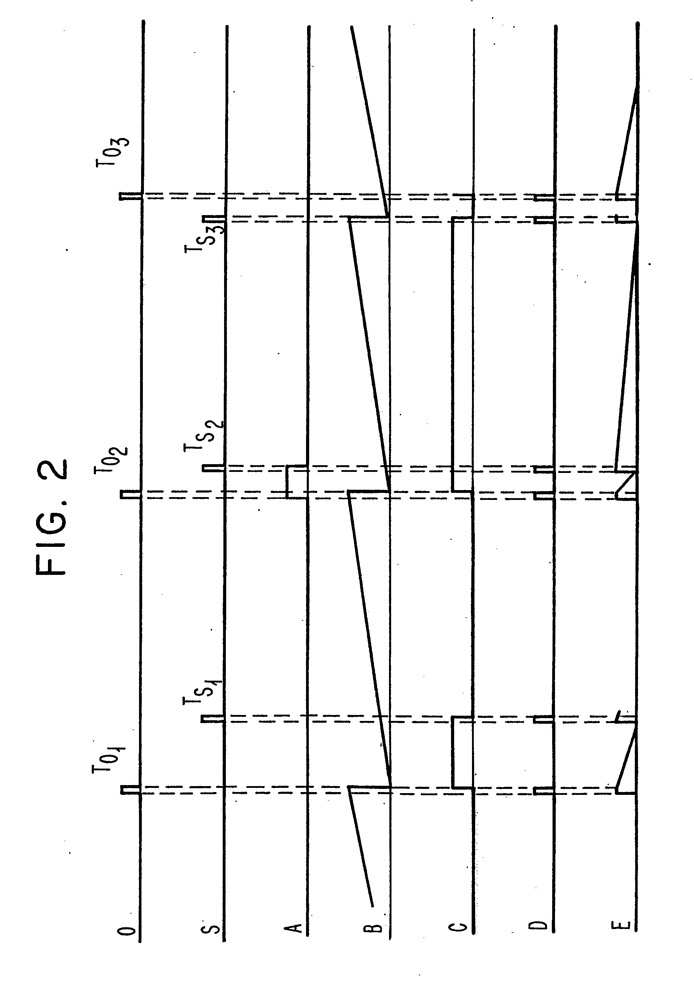

La figure 2 représente le diagramme en fonction du temps des niveaux d'un certain nombre de points significatifs de la figure 1 qui sont répertoriés par les mêmes lettres sur les deux figures.

Sur la ligne O de la figure 2 ont été représentées trois impulsions d'origine aux temps $T_{01}$, $T_{02}$, $T_{03}$ et sur la ligne S ont été représentées trois impulsions de sortie aux temps $T_{S1}$ entre $T_{01}$ et $T_{02}$, et $T_{S2}$ et $T_{S3}$ entre $T_{02}$ et $T_{03}$. Pour la clarté du diagramme, seulement deux impulsions de sortie ont été représentées dans un intervalle entre deux impulsions d'origine, mais il est évident qu'un nombre plus grand aurait pu être choisi. Il est à noter que la largeur des impulsions telles que représentées sur la figure a été très amplifiée pour la clarté de la représentation, mais ne correspond pas à la réalité, la durée des impulsions étant négligeable par rapport à l'intervalle entre deux impulsions. On peut remarquer également que l'enclenchement et la restauration des bascules de la figure 1 se fait sur le front arrière des impulsions de commande.

Sur la ligne A est représentée la sortie 15 qui est haute seulement entre une impulsion d'origine et l'impulsion de sortie suivante (ou l'avant-dernière impulsion de sortie) lorsque deux impulsions de sortie (ou plusieurs) sont produites dans un intervalle entre deux impulsions d'origine.

Sur la ligne B, on voit que le compteur 9 restauré par le flanc arrière de chaque impulsion d'origine incrémente en partant de 0, quel que soit l'intervalle considéré.

Sur la ligne C, on a représenté la ligne 17 de sortie de restauration de la bascule 23. Cette ligne qui sert d'« autorisation » au compteur 13, est normalement haute entre l'impulsion d'origine et l'impulsion de sortie qui suit, mais reste haute jusqu'à la deuxième impulsion de sortie au cas où il y a deux impulsions de sortie dans l'intervalle.

La ligne D représente l'état (passant ou bloqué) du circuit ET 12. Cette ligne est en fait la résultante des lignes O ou S.

La ligne E représente l'état du compteur 13. Comme on peut le voir sur la figure le compteur 13 ne décrémente que lorsque son entrée « autorisation » (C) est haute, et n'est chargé que lorsque la porte ET 12 est rendu passante (D). Par conséquent le compteur 13 est chargé au front avant de l'impulsion d'origine et commence à décrémenter au front arrière, mais ce décalage entre l'instant de chargement du compteur et le début de sa décrémentation n'a pas d'importance puisque le temps d'impulsion est négligeable par rapport au temps de décrémentation. On voit sur la figure que les impulsions $T_{S1}$ et $T_{S3}$, le compteur 13 est chargé. Mais peu importe qu'il soit chargé puisque à partir du front arrière de ces impulsions la sortie « autorisation » (C) est basse et le compteur 13 n'est plus autorisé à décrémenter.

Un autre mode de réalisation dans le cas où $n \geqslant N$ consiste à procéder en deux temps : dans un premier temps, la cadence des impulsions est multipliée dans un multiplicateur de fréquence par un facteur adéquat x égal à une puissance de 2 de façon à obtenir une cadence des impulsions d'origine égale à xN de telle sorte que l'on soit ramené au cas précédent consistant à obtenir un train de xN + n impulsions de sortie où $1 < n < xN$. Par exemple, si on veut obtenir 2N + 1 impulsions de sortie à partir de N impulsions d'origine, on fait d'abord passer le train d'impulsions dans un doubleur de fréquence de façon à obtenir un train de N' = 2N impulsions, puis on utilise le dispositif décrit pour obtenir un train de N' + 1 = 2N + 1 impulsions de sortie régulièrement espacées.

Il existe évidemment d'autres façons de réaliser l'invention lorsque $n \geqslant N$, sans sortir du cadre de l'invention. Ainsi, l'unité logique 10 pourrait être réalisée de façon différente et cette réalisation ne présente aucune difficulté pour l'homme de métier, à partir du moment où on connaît les fonctions de sortie à obtenir et les entrées dont on dispose.

De même dans le cas où n = 1 la mémoire ROS 3 peut être remplacée par un simple compteur puisqu'il n'y a qu'une impulsion de sortie dans chaque intervalle entre deux impulsions d'origine.

Dans le cours de la description qui précède on a considéré un intervalle de temps T unique séparant deux impulsions d'origine consécutives quelconques. En fait ce temps T n'est pas le même pour tous les intervalles. C'est pourquoi l'invention permet de synchroniser les impulsions de sortie sur l'impulsion d'origine qui la précède immédiatement de façon à s'affranchir des variations possibles de ces intervalles de temps. Ceci est réalisé du fait que la valeur du compteur 13 qui est décrémentée de façon à obtenir l'impulsion de sortie, est la valeur obtenue par incrémentation du compteur 9 dans l'intervalle de temps entre les deux impulsions d'origine.

## Application industrielle

Le dispositif de l'invention trouve application dans les imprimantes à aiguilles où l'impact de la tête d'impression sur le papier est commandé par des impulsions régulières. Généralement, la densité d'impulsion est de 10 caractères par 25,4 mm. Cependant, il est utile dans certains cas d'avoir une densité d'impression plus importante telle que 12 caractères par 25,4 mm. Il faut donc générer un train d'impulsions de commande de la tête ayant une cadence égale à 12/10 de celle des impulsions d'origine. Si on applique le dispositif de l'invention, on prend un nombre N = 5 et n = 1, en faisant coïncider la première des cinq impulsions d'origine avec la première des six impulsions de sortie. Le compteur variable pré-réglable (4 sur la figure 1) peut être dans ce cas, un compteur de capacité 16 à quatre entrées. M étant la valeur fournie par la mémoire ROS ; le compteur a ses entrées pré-réglées à la valeur 16-M. Le tableau suivant résume l'état des entrées dudit compteur pour chacune des impulsions de sortie.

(Voir Tableau p. 6).

| | 1ère impulsion sortie | 2ème | 3ème | 4ème | 5ème | 6ème |
|---|---|---|---|---|---|---|
| M | coïncide | 5 | 4 | 3 | 2 | 1 |
| | avec | | | | | |
| pré-ré-glage des entrées compteur | la première impulsion d'origine | 1011 | 1100 | 1101 | 1110 | 1111 |

Par exemple la troisième impulsion de sortie doit se produire normalement une durée 4T/6 après la deuxième impulsion d'origine (T étant l'intervalle entre 2 impulsions d'origine). Le compteur étant pré-réglé à 1100 (M = 4) et va subir les états :

$$1100 \rightarrow 1101 \rightarrow 1110 \rightarrow 1111$$

Ayant atteint 1111 il émet une impulsion et repasse à sa valeur de pré-réglage, l'impulsion émise étant connectée à son entrée « chargement ». Il aura donc fallu quatre impulsions de comptage pour qu'il émette une impulsion. Par conséquent si le compteur était commandé à la fréquence F, les impulsions qu'il émet ont une fréquence égale à F/4.

Evidemment cette application a été donnée à titre d'exemple, mais il existe bien d'autres applications possibles de l'invention, et principalement dans tous les systèmes utilisant un moteur pas à pas.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

**Revendications**

1. Dispositif pour obtenir, à partir de trains de N impulsions d'origine, des trains de N + n impulsions de sortie, la première impulsion de chacun des trains d'impulsions de sortie coïncidant avec la première impulsion du train d'impulsions d'origine correspondant,
un compteur à incrémentation (9) restauré par chaque impulsion d'origine pour incrémenter à une première fréquence prédéterminée jusqu'à l'impulsion d'origine suivante,
un compteur à décrémentation (13) chargé par le contenu dudit compteur à incrémentation (9) à l'apparition de ladite impulsion d'origine pour décrémenter à une seconde fréquence prédéterminée jusqu'à ce qu'il atteigne la valeur 0 ;
ledit dispositif étant caractérisé en ce qu'il comprend, pour n étant compris entre 1 et N non inclus :
un compteur (4) à pré-réglage variable à chaque impulsion d'origine fournissant ladite seconde fréquence prédéterminée audit compteur à décrémentation (13) de façon à ce que celui-ci décrémente à l'apparition de chaque impulsion d'origine ou à l'apparition des impulsions de sortie, sauf de la dernière de l'intervalle lorsque l'intervalle de temps entre lesdites impulsions d'origine doit comporter plusieurs impulsions de sortie, et
une unité de contrôle (3) pour pré-régler ledit compteur variable (4) à un nombre différent à chaque impulsion d'origine ; de sorte que ledit compteur à décrémentation (13) fournit les impulsions de sortie chaque fois qu'il atteint la valeur 0.

2. Dispositif selon la revendication 1 caractérisé en ce que ladite unité de contrôle (3) est une mémoire permanente à lecture seulement (ROS) fournissant des mots de commande audit compteur variable (4) en réponse aux impulsions d'origine.

3. Dispositif selon la revendication 2 caractérisé en ce que l'adressage de ladite mémoire permanente (3) s'effectue en partie par le contenu d'un compteur (2) qui s'incrémente à l'apparition de chaque impulsion d'origine.

4. Dispositif selon la revendication 2 ou 3 caractérisé en ce que :
la première fréquence prédéterminée à laquelle incrémente ledit compteur à incrémentation (9) est égale à F/N + n, F étant la fréquence de base du système,
la seconde fréquence prédéterminée fournie par ledit compteur variable (4) et à laquelle décrémente ledit compteur à décrémentation (13) est égale à F/M,

les mots de commande fournis audit compteur variable (4) par ladite mémoire permanente (3) sont des valeurs M dépendant de l'impulsion de sortie à obtenir.

5. Dispositif pour obtenir, à partir de trains de N impulsions d'origine des trains de N + n impulsions de sortie, la première impulsion de chacun des trains d'impulsion de sortie coïncidant avec la première impulsion du train d'impulsions d'origine correspondant, n étant plus grand ou égal à N, comprenant :

un multiplicateur de fréquence (x) placé à l'entrée du dispositif de façon à ce que les N impulsions soient transformées en N' impulsions telles que 1 ≤ n (N' − xN) et

un dispositif selon l'une quelconque des revendications précédentes.

6. Dispositif d'impression comportant une tête d'impression dont l'impact est commandé par un générateur d'impulsions de commande, caractérisé en ce que la densité d'impression est accrue de N caractères à N + n caractères par unité de longueur en interposant un dispositif selon l'une quelconque des revendications précédentes entre le gnérateur d'impulsions et la tête d'impression.

## Claims

1. A device for obtaining from N input pulses trains, N + n output pulse trains, the first pulse of each of the output pulse trains being coincident with the first pulse of the corresponding input pulse train,

a count-up counter (9) which is reset upon each input pulse in order to be incremented at a first predetermined frequency until the following input pulse,

a count-down counter (13) loaded with the contents of said count-up counter (9) when said input pulse appears in order to be decremented at a second predetermined frequency until it reaches value 0 ; said device being characterized in that it includes, for n being not included between 1 and N,

a presettable counter (4) variable for each input pulse, supplying said second predetermined frequency to said count-down counter (13) so that the latter is decremented when each input pulse appears or when output pulses appear, with the exception of the last pulse in the interval when the time interval between said input pulses must include several output pulses, and

a control unit (3) for presetting said presettable counter (4) to a different number in response to each input pulse so that said count-down counter (13) supplies the output pulses each time it reaches value 0.

2. A device according to claim 1, characterized in that said control unit (3) is a read-only storage (ROS) which supplies control words to said presettable counter (4) in response to the input pulses.

3. A device according to claim 2, characterized in that addressing said read only storage (3) is carried out by the contents of a counter (2) which is incremented each time an input pulse appears.

4. A device according to claim 2 or claim 3, characterized in that :

the first predetermined frequency at which said count-up counter (9) is incremented, is equal to F/N + n, F being the main frequency of the system,

the second predetermined frequency supplied by said presettable counter (4) and at which said count-down counter (13) is decremented, is equal to F/M,

the control words supplied to said presettable counter (4) by said read only storage (3) have values M which are dependent on the output pulse to be obtained.

5. A device for obtaining from the N input pulse train, N + n output pulse trains, the first pulse of each of output pulse trains being coincident with the first pulse of the corresponding input pulse train, n being greater than or equal to N, including :

a frequency multiplier (x) positioned at the input of the device so that the N pulses are changed into N' pulses in order that 1 ≤ n < (N' = xN), and

a device according to any one of the preceding claims.

6. A printing device having a printing head the impact of which is controlled by a control pulse generator, characterized in that the print density is increased from N characters to N + n characters per unit of length by placing a device according to any one of the preceding claims between the pulse generator and the printing head.

## Ansprüche

1. Vorrichtung, um aus Folgen von N Eingangsimpulsen Folgen von N + 1 Ausgangsimpulsen zu erhalten, wobei der erste Impuls einer jeden Folge von Ausgangsimpulsen mit dem ersten Impuls der entsprechenden Folge von Eingangsimpulsen zusammenfällt,

mit einem bei jedem Eingangsimpuls zurückgestellten Aufwärtszähler (9) zum Inkrementieren mit einer ersten vorbestimmten Frequenz bis zu dem folgenden Eingangsimpuls,

einem Abwärtszähler (13), der beim Auftreten des Eingangsimpulses mit dem Inhalt des Aufwärtszählers (9) geladen wird, zum Dekrementieren mit einer zweiten vorbestimmten Frequenz, bis der Wert O erreicht wird,

dadurch gekennzeichnet, daß die Vorrichtung für n zwischen 1 und N, N nicht inbegriffen, folgendes einschließt :

einen Zähler (4) mit bei jedem Eingangsimpuls variabler Voreinstellung, der die zweite vorbestimmte Frequenz dem Abwärtszähler (13) in der Weise zuführt, daß dieser bei Auftreten eines jeden Eingangsimpulses oder beim Auftreten der Ausgangsimpulse dekrementiert, mit Ausnahme des letzten Impulses der Intervalls, wenn der Zeitraum zwischen den Eingangsimpulsen mehrere Ausgangsimpulse einschließen muß, und

eine Kontrolleinheit (3), um den verstellbaren Zähler (4) auf eine bei jedem Eingangsimpuls andere Zahl voreinzustellen, so daß der Abwärtszähler (13) die Ausgangsimpulse liefert, sobald er den Wert O erreicht.

2. Vorrichtung nach Anspruch 1, dadurch gekennzeichnet, daß die Kontrolleinheit (3) ein Festspeicher (ROS) ist, der dem einstellbaren Zähler (4) als Antwort auf die Eingangsimpulse Steuerworte zuführt.

3. Vorrichtung nach Anspruch 2, dadurch gekennzeichnet, daß der Festspeicher (3) teilweise durch den Inhalt eines Zählers (2) adressiert wird, der beim Auftreten jedes Eingangsimpulses inkrementiert.

4. Vorrichtung nach Anspruch 2 oder 3, dadurch gekennzeichnet, daß

die erste vorbestimmte Frequenz, mit der der Aufwärtszähler (9) inkrementiert, gleich $F/N + n$ ist, wobei F die Basisfrequenz des Systems darstellt,

die zweite vorbestimmte Frequenz, die von dem einstellbaren Zähler (4) geliefert wird und mit der der Abwärtszähler (13) dekrementiert, gleich $F/M$ ist, und

die Steuerworte, die dem einstellbaren Zähler (4) von dem Festspeicher (3) geliefert werden, M-Werte darstellen, die von dem zu erhaltenden Ausgangsimpuls abhängen.

5. Vorrichtung, um aus Folgen von N Eingangsimpulsen Folgen von N + 1 Ausgangsimpulsen zu erhalten, wobei der erste Impuls einer jeden Folge von Ausgangsimpulsen mit dem ersten Impuls der entsprechenden Folge von Eingangsimpulsen zusammenfällt und n größer oder gleich N ist, die einschließt :

einen Frequenzmultiplikator (x), der am Eingang der Vorrichtung in der Weise angeordnet ist, daß die N Impulse in N' Impulse umgewandelt werden, so daß $1 < n < (N' = xN)$, und

eine Vorrichtung gemäß einem der vorhergehenden Ansprüche.

6. Druckvorrichtung mit einem Druckelement, dessen Aufschlag durch einen Steuerimpulsgenerator gesteuert wird, dadurch gekennzeichnet, daß die Druckdichte von N Schriftzeichen auf N + n Schriftzeichen je Längeneinheit erhöht wird, indem eine Vorrichtung gemäß einem der vorhergehenden Ansprüche zwischen dem Impulsgenerator und dem Druckelement angeordnet wird.

# FIG. 1

ROS

F M

F N+n

S R 22

S R 23

# FIG. 2

0 009 084